# EUROPÄISCHE PATENTSCHRIFT

(11) **EP 4 096 955 B1**
(45) Veröffentlichungstag und Bekanntmachung des Hinweises auf die Patenterteilung: **01.11.2023**
(21) Anmeldenummer: 20816442.6
(22) Anmeldetag: 27.11.2020
(51) Int. Cl.: B60K 28/14, B60W 30/18, B60W 50/14

(54) **VERFAHREN ZUM BETRIEB EINES ASSISTENZSYSTEMS**
METHOD FOR OPERATING AN ASSISTANCE SYSTEM
PROCÉDÉ POUR FAIRE FONCTIONNER UN SYSTÈME D'ASSISTANCE

(30) Priorität: 30.01.2020 DE 102020000593
(43) Veröffentlichungstag der Anmeldung: 07.12.2022
(73) Patentinhaber: Mercedes-Benz Group AG, 70372 Stuttgart (DE)
(72) Erfinder: HECKMANN, Alexander, 78315 Radolfzell (DE); KOLBE, Uli, 78234 Engen (DE); OLTMANN, Volker, 75365 Calw (DE)
(74) Vertreter: Novagraaf Group
(86) Internationale Anmeldenummer: PCT/EP2020/083604
(87) Internationale Veröffentlichungsnummer: WO 2021/151555

(56) Entgegenhaltungen:
- WO-A1-2018/216333
- US-A1- 2018 194 364

## Beschreibung

Die Erfindung betrifft ein Verfahren zum Betrieb eines Assistenzsystems zum automatisierten Fahrbetrieb eines Fahrzeuges, welches einer ermittelten Standardtrajektorie längs- und quergeregelt nachgeführt wird, wobei fortlaufend eine Notfalltrajektorie ermittelt wird, entlang welcher das Fahrzeug nach Aktivierung eines Notbetriebes des Fahrzeuges längs- und quergeregelt in einen Stillstand überführt wird.

Aus der WO 2018/216 333 A1 ist ein Verfahren und eine Vorrichtung zum Betreiben eines Fahrzeugs in einem autonomen Fahrbetrieb bekannt. Der autonome Fahrbetrieb kann dabei die automatisierte Durchführung von Fahrspurwechseln von einer jeweiligen Startspur zu einer jeweiligen Zielspur gemäß einer ermittelten Standardtrajektorie vorsehen, wobei es verschiedene Gründe für die Fahrspurwechsel geben kann. Fahrspurwechsel können beispielsweise durchgeführt werden, um ein bestimmtes Ziel zu erreichen, um einer Umleitung zu folgen, um ein vorausfahrendes Fahrzeug zu überholen oder um einem Hindernis auszuweichen. Wenn bei einem bevorstehenden oder eingeleiteten Fahrspurwechsel eine Abnormalität im Fahrzeug auftritt, wird in Abhängigkeit des Grundes für den Fahrspurwechsel entschieden, ob der Fahrspurwechsel abgeschlossen oder abgebrochen werden soll und das Fahrzeug wird entsprechend der Entscheidung in die Zielspur oder zurück in die Startspur geführt. Danach wird ein Fahrer des Fahrzeugs aufgefordert, den autonomen Fahrbetrieb in einen manuellen Fahrbetrieb umzuschalten. Wenn der Fahrer der Aufforderung nicht folgt, wird das Fahrzeug autonom entlang einer Notfalltrajektorie in eine sichere Stillstandsposition geführt.

Aus der US 2018/194 364 A1 ist ein Verfahren und eine Vorrichtung zum Steuern einer automatisierten Fahrt eines Fahrzeugs bekannt. Die Steuerung erfolgt dabei auf der Grundlage eines Aktionsplans, der eine Vielzahl von Ereignissen umfasst, unter anderem ein Spurwechselereignis, welche nacheinander ausgeführt werden. Dabei ist vorgesehen, dass basierend auf dem Aktionsplan ein anormaler Zustand einer Steuerung des Fahrzeugs erfasst wird und dass bei Erfassung des anormalen Zustands ein Inhalt der Steuerung des Fahrzeugs geändert wird.

Aus der DE 10 2015 003 124 A1 sind ein Verfahren und eine Vorrichtung zum Betreiben eines Fahrzeuges in einem automatisierten Fahrbetrieb bekannt. Während einer Normalfunktion des automatisierten Fahrbetriebes wird fortlaufend eine Notfallsolltrajektorie ermittelt und gespeichert, die nach Eintritt zumindest eines vorgegebenen Fehlerereignisses einer automatisierten Trajektorienregelung des Fahrzeuges zugrunde gelegt werden soll. Bei einer erfolgten Detektion des Eintrittes des zumindest einen vorgegebenen Fehlerereignisses wird ein Notfallbetriebsmodus aktiviert, in dem die automatisierte Trajektorienregelung des Fahrzeuges eingeleitet und gemäß der vor dem Eintritt des zumindest einen vorgegebenen Fehlerereignisses gespeicherten Notfallsolltrajektorie für eine vorgegeben Zeitdauer und/oder bis zum Stillstand des Fahrzeuges durchgeführt wird, falls und solange keine Fahrzeugführungsübernahme durch einen Fahrzeugführer des Fahrzeuges erfolgt.

Darüber hinaus beschreibt die DE 10 2017 011 808 A1 ein Verfahren zur Regelung der Bewegung eines Fahrzeuges in einem automatisierten Fahrbetrieb und eine Vorrichtung zur Durchführung des Verfahrens. Der automatisierte Fahrbetrieb wird von einem regulären Betriebsmodus, in dem das Fahrzeug mittels eines Hauptsteuergerätes automatisiert entlang einer regulären Solltrajektorie zu einer vorgegebenen Zielposition geführt wird, zu einem Notbetriebsmodus, in dem das Fahrzeug mittels eines Nebensteuergerätes automatisiert entlang einer Notbetriebs-Solltrajektorie zu einer Nothalteposition geführt wird, umgeschaltet, wenn eine Funktionsbeeinträchtigung des Hauptsteuergerätes festgestellt wird. Im regulären Betriebsmodus werden fortlaufend die reguläre Solltrajektorie, die Notbetriebs-Solltrajektorie und der Spurverlauf einer vom Fahrzeug befahrenen Fahrspur in einem fahrzeugfesten Koordinatensystem des Hauptsteuergerätes ermittelt. Die ermittelte Notbetriebs-Solltrajektorie und der ermittelte Spurverlauf werden dem Nebensteuergerät zugeführt und dort gespeichert. Im Notbetriebsmodus wird der Spurverlauf der vom Fahrzeug befahrenen Fahrspur in einem fahrzeugfesten Koordinatensystem des Nebensteuergerätes ermittelt. Im Notbetriebsmodus wird, basierend auf dem im Nebensteuergerät gespeicherten Spurverlauf und dem vom Nebensteuergerät ermittelten Spurverlauf der Fahrspur, eine Abweichung zwischen den Koordinatensystemen des Hauptsteuergerätes und des Nebensteuergerätes kompensiert.

Der Erfindung liegt die Aufgabe zugrunde, ein Verfahren zum Betrieb eines Assistenzsystems zum automatisierten Fahrbetrieb eines Fahrzeuges anzugeben.

Die Aufgabe wird erfindungsgemäß durch ein Verfahren gelöst, welches die in Anspruch 1 angegebenen Merkmale aufweist.

Vorteilhafte Ausgestaltungen der Erfindung sind Gegenstand der Unteransprüche.

Ein Verfahren zum Betrieb eines Assistenzsystems zum automatisierten Fahrbetrieb eines Fahrzeuges sieht vor, dass das Fahrzeug einer ermittelten Standardtrajektorie längs- und quergeregelt nachgeführt wird, wobei fortlaufend eine Notfalltrajektorie ermittelt wird, entlang welcher das Fahrzeug nach Aktivierung eines Notbetriebes des Fahrzeuges längs- und quergeregelt in einen Stillstand überführt wird. Erfindungsgemäß wird bei einem gemäß der ermittelten Standardtrajektorie bevorstehenden oder bereits eingeleiteten Fahrspurwechsel des Fahrzeugs von einer Startspur des Fahrzeugs auf eine Zielspur entschieden, ob das Fahrzeug bei Aktivierung des Notbetriebs auf der Startspur oder auf der Zielspur in den Stillstand überführt werden soll. Das heißt, es wird entschieden, ob der bevorstehende Fahrspurwechsel eingeleitet oder nicht eingeleitet werden soll bzw. ob der bereits eingeleitete Fahrspurwechsel fortgesetzt oder abgebrochen werden soll. Die Entscheidung wird dabei in Abhängigkeit von einer aktuellen Position des Fahrzeugs auf der ermittelten Standardtrajektorie getroffen. Das Fahrzeug wird dabei dann auf der Startspur in den Stillstand übergeführt, und mithin bei einem bereits eingeleiteten Fahrspurwechsel zurück in die Startspur geführt, wenn eine Trajektorie als Notfalltrajektorie planbar ist, mittels welcher das Fahrzeug innerhalb einer vorgegebenen Weglänge und/oder innerhalb einer vorgegebenen Zeitdauer auf der Startspur in den Stillstand überführt wird, und wenn dabei ein vorgegebener Komfortwert einer auf das Fahrzeug wirkenden Querbeschleunigung nicht überschritten wird und eine vorgegebene Eindringtiefe des Fahrzeuges in die Zielspur nicht überschritten wird.

Von einem bevorstehenden Fahrspurwechsel wird insbesondere dann ausgegangen, wenn die ermittelte Standardtrajektorie innerhalb eines vorgegebenen Beobachtungshorizonts des Fahrzeugs einen Fahrspurwechsel vorsieht, d.h. wenn der Fahrspurwechsel innerhalb eines vorgegebenen Zeit- oder Streckenabschnitts geplant ist.

Unter dem Begriff Startspur ist bei einem bevorstehenden Fahrspurwechsel diejenige Fahrspur des Fahrzeugs zu verstehen, aus der der bevorstehende Fahrspurwechsel eingeleitet wird, also eine momentane Fahrspur des Fahrzeugs. Bei einem bereits eingeleiteten Fahrspurwechsel ist unter dem Begriff Startspur diejenige Fahrspur zu verstehen, aus der Fahrspurwechsel eingeleitet worden ist. Unter dem Begriff Zielspur ist diejenige Fahrspur des Fahrzeugs zu verstehen, auf der der Fahrspurwechsel enden soll, wenn er nicht vorzeitig abgebrochen wird.

Das Verfahren stellt eine Rückfalllösung für einen Notbetrieb des Fahrzeuges dar, beispielsweise bei einem Ausfall eines Hauptsteuergerätes des Fahrzeuges, wobei der Betrieb des Fahrzeuges, insbesondere der automatisierte Fahrbetrieb, in einem solchen Fall weitestgehend ohne redundante Umfeldsensoren möglich ist.

Durch Anwendung des Verfahrens kann im Wesentlichen sichergestellt werden, dass das Fahrzeug im Notbetrieb entsprechend der bei Aktivierung des Notbetriebs getroffenen Entscheidung entweder auf der Startspur oder der Zielspur in den sicheren Stillstand überführt wird. Dadurch kann weitestgehend ausgeschlossen werden, dass weitere Fahrzeuge auf beiden Fahrspuren behindert oder sogar beide Fahrspuren blockiert werden.

Es kann also weitestgehend ausgeschlossen werden, dass das Fahrzeug auch bei einem bereits eingeleiteten Fahrspurwechsel diesen bei Aktivierung des Notbetriebes abrupt abbricht und das Fahrzeug in den Stillstand versetzt wird oder auf die Startspur zurückfährt, wenn die wirkende Querbeschleunigung den Komfortwert überschreitet und die vorgegebene Eindringtiefe in die Zielspur überschritten wird. In diesem Fall wird der Fahrspurwechsel durchgeführt und das Fahrzeug wird auf die Zielspur gelenkt um das Fahrzeug vergleichsweise komfortabel und sicher abzubremsen.

Eine weitere Ausführung des Verfahrens sieht vor, dass die Entscheidung, auf welcher Fahrspur das Fahrzeug in den Stillstand überführt wird, unter Berücksichtigung einer auf der Startspur und/oder der Zielspur bestehenden Kollisionsgefahr getroffen wird und das Fahrzeug auf der weniger gefährdeten Fahrspur in den Stillstand überführt wird. Das Fahrzeug wird also auf der Fahrspur in den Stillstand abgebremst, auf welcher ein Risiko für Konflikte und Kollisionen mit weiteren Verkehrsteilnehmern, insbesondere mit weiteren Fahrzeugen, als vergleichsweise gering eingestuft wird.

Nach der Planung oder Einleitung des Fahrspurwechsels werden in einer Weiterbildung des Verfahrens fortlaufend zwei Notfalltrajektorien ermittelt, die das Fahrzeug innerhalb der vorgegebenen Weglänge und/oder innerhalb der vorgegebenen Zeitdauer auf der Startspur bzw. auf der Zielspur in den Stillstand überführen. Somit kann weitestgehend sichergestellt werden, dass es im aktivierten Notbetrieb möglich ist, das Fahrzeug sowohl auf der Startspur als auch auf der Zielspur in den sicheren Stillstand abzubremsen.

Bei aktiviertem Notbetrieb des Fahrzeuges wird eine Warnblinkanlage des Fahrzeuges in Abhängigkeit eines Landes, in welchem sich das Fahrzeug befindet, entweder bei Aktivieren des Notbetriebes oder bei Erreichen des Stillstandes des Fahrzeuges automatisch aktiviert.

Durch Aktivieren der Warnblinkanlage werden die weiteren Verkehrsteilnehmer in der Umgebung des Fahrzeuges auf das abbremsende Fahrzeug oder auf das stehende Fahrzeug aufmerksam gemacht, so dass den weiteren Verkehrsteilnehmern die Möglichkeit gegeben wird, dem Fahrzeug entsprechend frühzeitig ausweichen zu können.

Dazu wird insbesondere eine momentane Position des Fahrzeuges anhand erfasster Signale einer satellitengestützten Positionsbestimmungseinheit ermittelt, so dass das Land, in dem sich das Fahrzeug momentan befindet, bestimmt werden kann. Ist das Land bekannt, kann ermittelt werden, zu welchem Zeitpunkt die Warnblinkanlage des Fahrzeuges aktiviert werden sollte, um auf das Fahrzeug aufmerksam zu machen.

Wird der Notbetriebes des Fahrzeuges aktiviert, insbesondere aufgrund eines detektierten Fehlerfalles, wird in dem Fahrzeug ein Warnhinweis optisch, akustisch und/oder haptisch ausgegeben, so dass ein Fahrzeugnutzer und gegebenenfalls vorhandene weitere Fahrzeuginsassen auf den fahrzeugseitig vorliegenden Umstand hingewiesen werden.

Um das Fahrzeug im erreichten Stillstand zu sichern, wird in einer möglichen Weiterbildung eine Parkbremse aktiviert und eine entsprechende Getriebegangstufe eingestellt, so dass das Fahrzeug gegenüber einem Wegrollen gesichert ist.

Ausführungsbeispiele der Erfindung werden im Folgenden anhand von Zeichnungen näher erläutert.

Dabei zeigen:
- Fig. 1: schematisch eine Fahrsituation im automatisierten Fahrbetrieb eines Fahrzeuges nach dem Stand der Technik,
- Fig. 2: schematisch eine weitere Fahrsituation im automatisierten Fahrbetrieb eines Fahrzeuges nach dem Stand der Technik,
- Fig. 3: schematisch eine Fahrsituation eines im automatisierten Fahrbetrieb fahrenden Fahrzeuges bei Anwendung eines erfindungsgemäßen Verfahrens und
- Fig. 4: schematisch eine weitere Fahrsituation des im automatisierten Fahrbetrieb fahrenden Fahrzeuges bei Anwendung des erfindungsgemäßen Verfahrens.

Einander entsprechende Teile sind in allen Figuren mit den gleichen Bezugszeichen versehen.

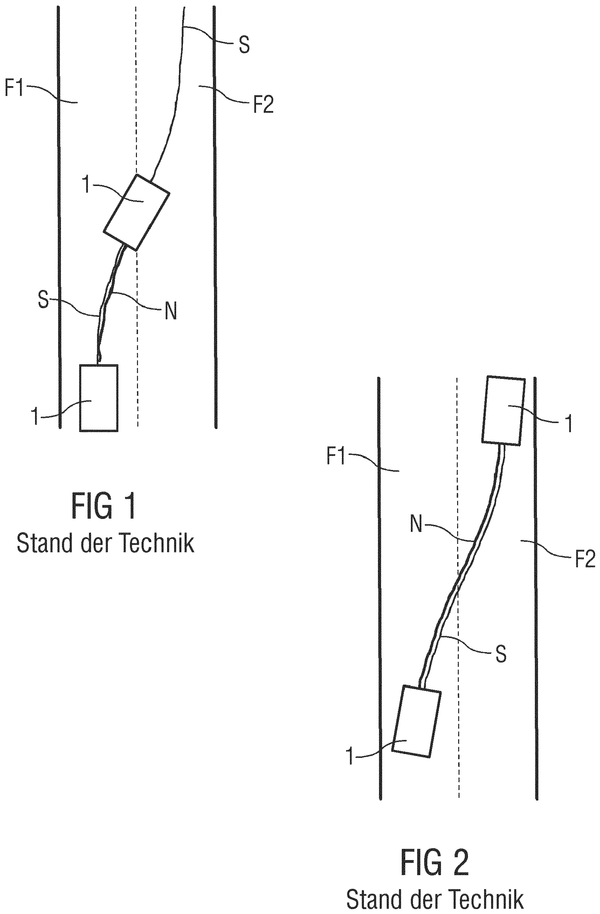

Die Figuren 1 und 2 zeigen jeweils eine Fahrsituation eines Fahrzeuges 1 im automatisierten Fahrbetrieb nach dem Stand der Technik.

Zur Ausführung des automatisierten Fahrbetriebes verfügt das Fahrzeug 1 über ein Assistenzsystem, welches im aktivierten Zustand eine Fahraufgabe vollumfänglich ausführt.

Im automatisierten Fahrbetrieb wird insbesondere mittels des Assistenzsystems eine Standardtrajektorie S ermittelt, welche dem Fahrzeug 1 vorgegeben wird und der das Fahrzeug 1 längs- und quergeregelt nachgeführt wird.

Während das Fahrzeug 1 der Standardtrajektorie S nachgeführt wird, wird eine Notfalltrajektorie N ermittelt, entlang welcher das Fahrzeug 1 nach Aktivierung eines Notbetriebes des Fahrzeuges 1, beispielsweise aufgrund eines Ausfalles eines Hauptsteuergerätes, längs- und quergeregelt in einen Stillstand, insbesondere einen sicheren Stillstand, überführt wird. Dieser Notbetrieb wird insbesondere aktiviert, wenn eine sichere Fortsetzung des automatisierten Fahrbetriebes nicht gewährleistet werden kann.

Figur 1 zeigt eine Fahrsituation im automatisierten Fahrbetrieb des Fahrzeuges 1, bei welcher ein Fahrspurwechsel des Fahrzeuges 1 von einer Startspur F1 auf eine Zielspur F2 geplant ist, wie anhand der geplanten Standardtrajektorie S gezeigt ist.

Die Notfalltrajektorie N entspricht ihres Ortsverlaufs der Standardtrajektorie S, so dass das Fahrzeug 1 im aktivierten Notbetrieb als redundante Fahrfunktion des Fahrzeuges 1 bei Durchführung des Fahrspurwechsels in den Stillstand abgebremst wird. Das Fahrzeug 1 wird dabei so abgebremst, dass es sich sowohl auf der Startspur F1 als auch auf der Zielspur F2 befindet. Weitere Verkehrsteilnehmer können dadurch behindert werden, wobei das Fahrzeug 1 im Stillstand ebenso die Startspur F1 und die Zielspur F2 blockiert.

In einer in Figur 2 gezeigten Fahrsituation des Fahrzeuges 1 ist der Fahrspurwechsel bereits eingeleitet, wobei sich das Fahrzeug 1 noch auf seiner Startspur F1 befindet. Die Notfalltrajektorie N entspricht hinsichtlich ihres Ortsverlaufs der Standardtrajektorie S, so dass das Fahrzeug 1 im aktivierten Notbetrieb den Fahrspurwechsel durchführt.

Das Fahrzeug 1 umfasst eine nicht gezeigte Umfeldsensorik, wobei eine Funktion einer Anzahl von Umfeldsensoren der Umfeldsensorik auch im aktivierten Notbetrieb des Fahrzeuges 1 zur Verfügung steht.

Das Assistenzsystem umfasst ein Hauptsteuergerät zur Durchführung des automatisierten Fahrbetriebes und ein Nebensteuergerät zur Steuerung des Fahrzeuges 1 im Notbetrieb. Das Hauptsteuergerät ermittelt während des automatisierten Fahrbetriebes fortlaufend die im Notbetrieb anzuwendende Notfalltrajektorie N und stellt diese dem Nebensteuergerät zur Verfügung. Im aktivierten Notbetrieb übernimmt das Nebensteuergerät die Aufgabe, das Fahrzeug 1 zu steuern. Somit ist das Assistenzsystem auch bei einem durch einen Ausfall des Hauptsteuergerätes bedingten Notbetrieb in der Lage, das Fahrzeug 1 gemäß der zuvor vom Hauptsteuergerät ermittelten Notfalltrajektorie N in einen sicheren Zustand, insbesondere sicheren Stillstand, zu führen. Im Allgemeinen ist das Nebensteuergerät weniger leistungsfähig ausgeführt als das Hauptsteuergerät. Insbesondere handelt es sich bei dem Nebensteuergerät um ein Steuergerät zur Fahrdynamikstabilisierung und ist dazu ausgebildet, satellitengestützte Informationen und erfasste Signale einer fahrzeugseitigen Kamera als Umfeldsensor zu verarbeiten. Anhand der satellitengestützten Informationen ist eine genauere Lokalisierung des Fahrzeuges 1 möglich, als wenn die Ermittlung einer momentanen Position des Fahrzeuges 1 auf erfassten Raddrehzahlen basiert.

Bei einer verhältnismäßig schwerwiegenden Fehlfunktion des automatisierten Fahrbetriebs des Fahrzeuges 1, beispielsweise bei einem Ausfall des Hauptsteuergerätes, steht dem Fahrzeug 1 im aktivierten Notbetrieb die Funktion der nötigsten Umfeldsensoren zur Verfügung. Eine solche Aufteilung ermöglicht auch ohne redundante Umfeldsensoren, das Fahrzeug 1 bei einem Ausfall des Hauptsteuergerätes oder einem Ausfall eines Nebensteuergerätes beherrschen zu können.

Sowohl das Hauptsteuergerät als auch das Nebensteuergerät des Fahrzeuges 1 sind mit jeweils einem Fahrregler zum automatisierten Fahrbetrieb und zum Notbetrieb, mit einer Vorrichtung zum Lenken, zum Bremsen und mit einer Anzahl der Umfeldsensoren sowie weiteren Sensoren verbunden.

Im Notbetrieb steht die Funktion zumindest eines beispielsweise als Kamera ausgeführten Sensors zur Verfügung, wobei anhand erfasster Signale, insbesondere Bildsignale, die Startspur F1 und die Zielspur F2 detektiert werden. Ein Erfassungsbereich der Kamera ist vor das Fahrzeug 1 gerichtet und im Fahrbetrieb des Fahrzeuges 1 werden fortlaufend Signale erfasst, anhand derer zudem auch Objekte und Hindernisse vor dem Fahrzeug 1 detektiert werden. Dadurch ist es möglich, eine kollisionsvermeidende und/oder kollisionsfolgenmindernde Maßnahme einzuleiten.

Das Assistenzsystem versucht unter Verwendung erfasster Signale der Umfeldsensoren das Fahrzeug 1 im automatisierten Fahrbetrieb mit einer vergleichsweise hohen Reisegeschwindigkeit zu bewegen, wobei das Fahrzeug 1 längs- und quergeregelt der ermittelten Standardtrajektorie S nachgeführt wird.

Gemäß dem Stand der Technik wird die Standardtrajektorie S als Notfalltrajektorie N für den aktivierten Notbetrieb verwendet, wobei das Fahrzeug 1 mit einem vorgegebenen Verzögerungsprofil in den Stillstand überführt wird. Insbesondere geben die Standardtrajektorie S und die Notfalltrajektorie N nicht nur eine Reihe von Ortskoordinaten vor, entlang derer das Fahrzeug 1 geführt wird, sondern auch Informationen in Bezug auf einen gewünschten Geschwindigkeits- und Beschleunigungsverlauf entlang dieser Ortskoordinaten.

Führt das Fahrzeug 1 gemäß der Standardtrajektorie S einen Fahrspurwechsel durch, während dem der Notbetrieb des Fahrzeuges 1 aktiviert wird, besteht das Risiko, dass das Fahrzeug 1 beim Durchführen des Fahrspurwechsels in den Stillstand versetzt wird und somit auf der Startspur F1 und der Zielspur F2 zum Stehen kommt, wie in Figur 1 gezeigt ist.

Folgt das Fahrzeug 1 im aktivierten Notbetrieb, wie in Figur 2 dargestellt ist, der Standardtrajektorie S und somit der Notfalltrajektorie N mit einem in einer Verzögerung reduzierten Verzögerungsprofil und führt den Fahrspurwechsel durch, dann befindet sich das Fahrzeug 1 zwar auf der Zielspur F2 als Zielspur des Fahrspurwechsels, aber dieser erfolgt ohne eine seitliche und rückwärtige Objekterfassung. Dadurch stellt das Fahrzeug 1 ein erhebliches Risiko für weitere Verkehrsteilnehmer dar und setzt sich selbst einem vergleichsweise hohen Kollisionsrisiko aus. Beispielsweise kann die Zielspur F2 von weiteren Verkehrsteilnehmern im Bereich des den Fahrspurwechsel durchführenden Fahrzeuges 1 befahren werden, wobei die weiteren Verkehrsteilnehmer nicht oder erst relativ spät erkannt werden. Eine derartige Gefahr nimmt mit einer Fahrdauer in Bezug auf die vorgegebene Notfalltrajektorie N auf der Zielspur F2 zu. Üblicherweise kann ein Fahrspurwechsel des Fahrzeuges 1 im automatisierten Fahrbetrieb auf eine Zielspur F2, eine nicht näher gezeigte Ausfahrtfahrspur oder auf einen Standstreifen erfolgen.

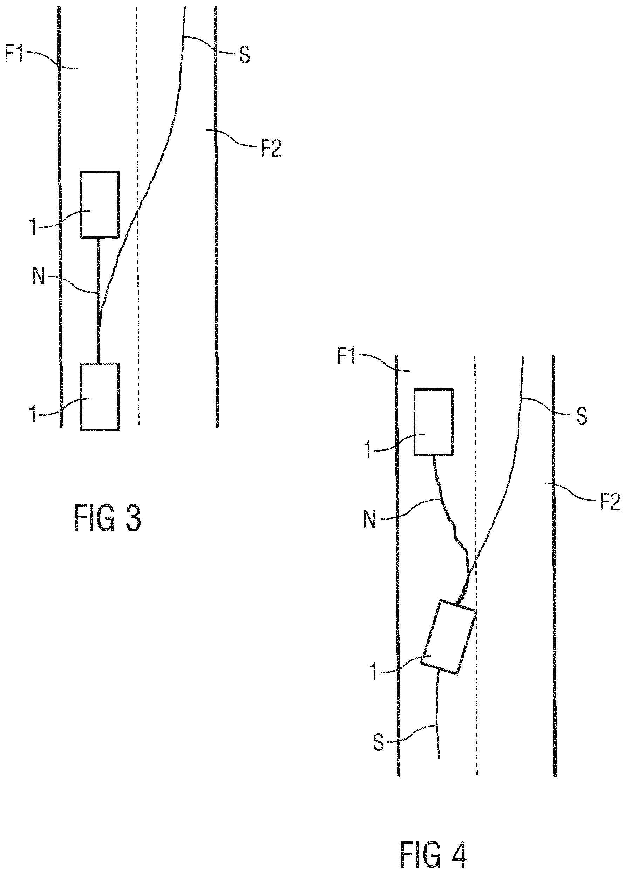

Um einen aktivierten Notbetrieb des Fahrzeuges 1 bei einem geplanten oder bereits eingeleiteten Fahrspurwechsel in Bezug auf Komfort und Sicherheit für das Fahrzeug 1 und weitere Verkehrsteilnehmer zu optimieren, ist ein im Folgenden anhand der Figuren 3 und 4 beschriebenes Verfahren vorgesehen.

Im automatisierten Fahrbetrieb des Fahrzeuges 1 werden nach einer Planung oder Einleitung eines Fahrspurwechsels zwei Notfalltrajektorien N ermittelt, wobei das Fahrzeug 1 entlang der einen Notfalltrajektorie N innerhalb einer vorgegebenen Weglänge oder innerhalb einer vorgegebenen Zeitdauer auf der Startspur F1 des Fahrzeuges 1 in den sicheren Stillstand überführt wird. Eine weitere ermittelte Notfalltrajektorie N ist dazu vorgesehen, das Fahrzeug 1 auf der Zielspur F2 innerhalb der vorgegebenen Weglänge oder innerhalb der vorgegebenen Zeitdauer in den Stillstand zu überführen.

Gemäß dem Ausführungsbeispiel in Figur 3 folgt das Fahrzeug 1 der ermittelten Notfalltrajektorie N auf der Startspur F1, obwohl ein mittels der Standardtrajektorie S dargestellter Fahrspurwechsel auf die Zielspur F2 geplant ist. Das Fahrzeug 1 wird entsprechend dem vorgegebenen Verzögerungsprofil der Notfalltrajektorie N in den Stillstand versetzt.

Insbesondere wird das Fahrzeug 1 in der Startspur F1 in den Stillstand versetzt, wenn die Notfalltrajektorie N vorgibt, dass das Fahrzeug 1 innerhalb einer vorgegebenen Weglänge oder innerhalb einer vorgegebenen Zeitdauer auf der Startspur F1 verzögert werden kann, ohne dass eine auf das Fahrzeug 1 wirkende Querbeschleunigung einen vorgegebenen Komfortwert überschreitet, und ohne dass das Fahrzeug 1 bereits um eine vorgegebene Tiefe in die Zielspur F2 eingedrungen ist, wie in Figur 4 gezeigt ist.

Beispielsweise liegt der vorgegebene Komfortwert in Bezug auf die Querbeschleunigung in einem Bereich zwischen 0,5 m/s² und 3 m/s².

In Abhängigkeit von der Querbeschleunigung und der Eindringtiefe des Fahrzeuges 1 in die Zielspur F2 bei bereits eingeleitetem Fahrspurwechsel als Entscheidungskriterien, wird eine entsprechende Notfalltrajektorie N gewählt und das Fahrzeug 1 entlang dieser in den sicheren Stillstand überführt. Dabei stellt die gewählte Notfalltrajektorie N eine Solltrajektorie für eine Längs- und Querregelung des Fahrzeuges 1 dar.

Durch eine Berücksichtigung der Bildsignale der Kamera als Umfeldsensor ist es möglich, kollisionsgefährdende Objekte auf der jeweiligen Notfalltrajektorie N zu detektieren, die bei der Ermittlung der Notfalltrajektorie N nicht erfasst wurden. Dadurch ist es möglich, beispielsweise durch eine durchgeführte stärkere Bremsung, eine Kollision zwischen dem Fahrzeug 1 und einem potentiellen Kollisionsobjekt zu vermeiden. Es wird also ein Geschwindigkeits- und/oder Beschleunigungsverlauf der Notfalltrajektorie N an sich ändernde Umgebungssituationen angepasst. Auch wird die Notfalltrajektorie N gewählt, welche ein geringeres Kollisionsrisiko aufweist und eine Notbremsung weitestgehend vermieden werden kann. Es wird also zusätzlich zur Querbeschleunigung oder Eindringtiefe die Notfalltrajektorie N gewählt, welche ein geringes oder kein Risiko in Bezug auf kritische Situationen birgt. Beispielsweise kann eine kritische Situation durch ein vergleichsweise kurzfristig auftauchendes Hindernis, z. B. ein langsam fahrendes oder kreuzendes weiteres Fahrzeug oder ein stehendes Objekt, entstehen, die sich auf einer der Notfalltrajektorien N befinden.

Weiterhin sieht das Verfahren vor, dass bei Aktivieren des Notbetriebes des Fahrzeuges 1 ein Warnhinweis im Fahrzeug 1 ausgegeben wird, wobei dieser optisch, akustisch und/oder haptisch, beispielsweise durch Aktivierung eines reversiblen Gurtstraffers, ausgegeben wird.

In Abhängigkeit eines Landes, in dem sich das Fahrzeug 1 befindet, wird eine Warnblinkanlage des Fahrzeuges 1 zum Zeitpunkt des Aktivierens des Notbetriebes oder zum Zeitpunkt des Stillstandes des Fahrzeuges 1 automatisch eingeschaltet.

Zur Ermittlung in welchem Land sich das Fahrzeug 1 befindet, wird eine momentane Position des Fahrzeuges 1 anhand eines Positionsbestimmungssignals einer satellitengestützten Positionsbestimmungseinheit erfasst. Entsprechend des Landes und geltender Vorschriften wird die Warnblinkanlage eingeschaltet.

Zudem wird im Stillstand des Fahrzeuges 1 automatisch eine Parkbremse aktiviert und eine Getriebegangstufe für Parken eingelegt, um das Fahrzeug 1 gegenüber einem Wegrollen zu sichern.

## Patentansprüche

1. Verfahren zum Betrieb eines Assistenzsystems zum automatisierten Fahrbetrieb eines Fahrzeuges (1), welches einer ermittelten Standardtrajektorie (S) längs- und quergeregelt nachgeführt wird, wobei fortlaufend eine Notfalltrajektorie (N) ermittelt wird, entlang welcher das Fahrzeug (1) nach Aktivierung eines Notbetriebes des Fahrzeuges (1) längs- und quergeregelt in einen Stillstand überführt wird, wobei bei einem gemäß der ermittelte Standardtrajektorie (S) bevorstehenden oder bereits eingeleiteten Fahrspurwechsel des Fahrzeugs (1) von einer Startspur (F1) auf eine Zielspur (F2) in Abhängigkeit einer Position des Fahrzeugs auf der ermittelten Standardtrajektorie (S) entschieden wird, ob das Fahrzeug (1) bei Aktivierung des Notbetriebs auf der Startspur (F1) oder auf der Zielspur (F2) in den Stillstand überführt werden soll, und
wobei das Fahrzeug (1) dann auf der Startspur (F1) in den Stillstand überführt wird, wenn eine Notfalltrajektorie (N) geplant wird, mittels welcher das Fahrzeug (1) innerhalb einer vorgegebenen Weglänge und/oder innerhalb einer vorgegebenen Zeitdauer auf der Startspur (F1) in den Stillstand überführt wird, und wenn dabei ein vorgegebener Komfortwert einer auf das Fahrzeug (1) wirkenden Querbeschleunigung und eine vorgegebene Eindringtiefe des Fahrzeuges (1) in die Zielspur (F2) nicht überschritten werden.

2. Verfahren nach Anspruch 1,
**dadurch gekennzeichnet, dass**
die Entscheidung unter Berücksichtigung einer auf der Startspur (F1) und/oder der Zielspur (F2) bestehenden Kollisionsgefahr getroffen wird und das Fahrzeug (1) auf der weniger gefährdeten Fahrspur (F1, F2) in den Stillstand überführt wird.

3. Verfahren nach einem der vorhergehenden Ansprüche,
**dadurch gekennzeichnet, dass**
nach der Planung oder Einleitung des Fahrspurwechsels fortlaufend zwei Notfalltrajektorien (N) ermittelt werden, die das Fahrzeug (1) innerhalb der vorgegebenen Weglänge und/oder innerhalb der vorgegebenen Zeitdauer auf der Startspur (F1) bzw. auf der Zielspur (F2) in den Stillstand überführen.

4. Verfahren nach einem der vorhergehenden Ansprüche,
**dadurch gekennzeichnet, dass**
bei aktiviertem Notbetrieb des Fahrzeuges (1) eine Warnblinkanlage des Fahrzeuges (1) in Abhängigkeit eines Landes, in welchem sich das Fahrzeug (1) befindet, entweder bei Aktivieren des Notbetriebes oder bei Erreichen des Stillstandes des Fahrzeuges (1) automatisch aktiviert wird.

5. Verfahren nach einem der vorhergehenden Ansprüche,
**dadurch gekennzeichnet, dass**
eine momentane Position des Fahrzeuges (1) anhand erfasster Signale einer satellitengestützten Positionsbestimmungseinheit ermittelt wird.

6. Verfahren nach einem der vorhergehenden Ansprüche,
**dadurch gekennzeichnet, dass**
bei Aktivierung des Notbetriebes des Fahrzeuges (1) ein Warnhinweis in dem Fahrzeug (1) optisch, akustisch und/oder haptisch ausgegeben wird.

7. Verfahren nach einem der vorhergehenden Ansprüche,
**dadurch gekennzeichnet, dass**
im erreichten Stillstand des Fahrzeuges (1) eine Parkbremse des Fahrzeuges (1) aktiviert und eine entsprechende Getriebegangstufe eingestellt werden.

## Claims

1. Method for operating an assistance system for automated driving operation of a vehicle (1), which is guided along a determined standard trajectory (S) in a longitudinally and transversely controlled manner, wherein an emergency trajectory (N) is continuously determined, along which the vehicle (1) is brought to a standstill in a longitudinally and transversely controlled manner after activation of an emergency operation of the vehicle (1),
wherein, in the case of a lane change of the vehicle (1) from a starting lane (F1) to a target lane (F2), which change is imminent or already initiated according to the determined standard trajectory (S), it is decided whether the vehicle (1) is to be brought to a standstill in the starting lane (F1) or in the target lane (F2) upon activation of the emergency operation, depending on a position of the vehicle on the determined standard trajectory (S), and
wherein the vehicle (1) is then brought to a standstill in the starting lane (F1) if an emergency trajectory (N) is planned, by means of which the vehicle (1) is brought to a standstill in the starting lane (F1) within a predetermined travel distance and/or within a predetermined period of time, and if a predetermined comfort value of a transverse acceleration acting on the vehicle (1) and a predetermined penetration depth of the vehicle (1) into the target lane (F2) are not exceeded.

2. Method according to claim 1,
**characterized in that**
the decision is made taking into account a risk of collision present in the starting lane (F1) and/or in the target lane (F2), and the vehicle (1) is brought to a standstill in the less hazardous lane (F1, F2).

3. Method according to any of the preceding claims,
**characterized in that**
after the planning or initiation of the lane change, two emergency trajectories (N) are determined continuously, which bring the vehicle (1) to a standstill in the starting lane (F1) or in the target lane (F2) within the predetermined travel distance and/or within the predetermined period of time.

4. Method according to any of the preceding claims,
**characterized in that**
when the emergency operation of the vehicle (1) is activated, a hazard light system of the vehicle (1) is automatically activated either when the emergency operation is activated or when the vehicle (1) reaches a standstill, depending on a country in which the vehicle (1) is located.

5. Method according to any of the preceding claims,
**characterized in that**
a current position of the vehicle (1) is determined on the basis of detected signals of a satellite-based position determination unit.

6. Method according to any of the preceding claims,
**characterized in that**
when the emergency operation of the vehicle (1) is activated, a warning message is output in the vehicle (1) optically, acoustically and/or haptically.

7. Method according to any of the preceding claims,
**characterized in that**
when the vehicle (1) reaches a standstill, a parking brake of the vehicle (1) is activated and an appropriate gear is selected.

## Revendications

1. Procédé permettant de faire fonctionner un système d'assistance pour un fonctionnement de conduite automatisé d'un véhicule (1), lequel est guidé de manière régulée longitudinalement et transversalement le long d'une trajectoire standard déterminée (S), dans lequel une trajectoire d'urgence (N) est déterminée en continu, le long de laquelle le véhicule (1) est mis à l'arrêt de manière régulée longitudinalement et transversalement après l'activation d'un fonctionnement d'urgence du véhicule (1),
dans lequel, dans le cas d'un changement de voie imminent ou déjà amorcé du véhicule (1) selon la trajectoire standard déterminée (S) d'une voie de départ (F1) vers une voie cible (F2), il est décidé, en fonction d'une position du véhicule sur la trajectoire standard déterminée (S), si le véhicule (1), lors de l'activation du fonctionnement d'urgence, doit être mis à l'arrêt sur la voie de départ (F1) ou sur la voie cible (F2), et
dans lequel le véhicule (1) est ensuite mis à l'arrêt sur la voie de départ (F1) lorsqu'une trajectoire d'urgence (N) est planifiée, au moyen de laquelle le véhicule (1) est mis à l'arrêt sur la voie de départ (F1) dans une longueur de trajet prédéfinie et/ou dans une période de temps prédéfinie, et lorsqu'ainsi une valeur de confort prédéfinie d'une accélération transversale agissant sur le véhicule (1) et une profondeur de pénétration prédéfinie du véhicule (1) dans la voie cible (F2) ne sont pas dépassées.

2. Procédé selon la revendication 1,
**caractérisé en ce que**
la décision est prise en tenant compte d'un risque de collision existant sur la voie de départ (F1) et/ou la voie cible (F2) et le véhicule (1) est mis à l'arrêt sur la voie (F1, F2) la moins dangereuse.

3. Procédé selon l'une des revendications précédentes,
**caractérisé en ce que**
après la planification ou l'amorçage du changement de voie, deux trajectoires d'urgence (N) sont déterminées en continu, lesquelles mettent le véhicule (1) à l'arrêt sur la voie de départ (F1) ou sur la voie cible (F2) dans la longueur de trajet prédéfinie et/ou dans la période de temps prédéfinie.

4. Procédé selon l'une des revendications précédentes,
**caractérisé en ce que**
lorsque le fonctionnement d'urgence du véhicule (1) est activé, des feux de détresse du véhicule (1) sont activés automatiquement soit lors de l'activation du fonctionnement d'urgence, soit lors de l'atteinte de l'arrêt du véhicule (1), en fonction d'un pays dans lequel le véhicule (1) se situe.

5. Procédé selon l'une des revendications précédentes,
**caractérisé en ce que**
une position actuelle du véhicule (1) est déterminée au moyen de signaux détectés d'une unité de détermination de position par satellite.

6. Procédé selon l'une des revendications précédentes,
**caractérisé en ce que**
lors de l'activation du fonctionnement d'urgence du véhicule (1), un avertissement est émis de manière optique, acoustique et/ou haptique dans le véhicule (1).

7. Procédé selon l'une des revendications précédentes,
**caractérisé en ce que**
à l'atteinte de l'arrêt du véhicule (1), un frein de stationnement du véhicule (1) est activé et un rapport de boîte correspondant est réglé.
